# EUROPEAN PATENT SPECIFICATION

(11) **EP 4 651 712 B1**
(45) Date of publication and mention of the grant of the patent: **30.09.2026**
(21) Application number: 24704898.6
(22) Date of filing: 15.01.2024
(51) Int. Cl.: A01N 25/02, A01N 25/06, A01N 25/30, A01P 13/00

(54) **ADJUVANT COMPOSITION FOR AGROCHEMICALS, METHOD FOR MANUFACTURE, AND USE THEREOF**
ADJUVANT-ZUSAMMENSETZUNG FÜR AGROCHEMIKALIEN, VERFAHREN ZUR HERSTELLUNG UND VERWENDUNG DAVON
COMPOSITION D'ADJUVANTS POUR PRODUITS AGROCHIMIQUES, PROCÉDÉ DE FABRICATION ET LEUR UTILISATION

(30) Priority: 17.01.2023 PL 44351023
(43) Date of publication of application: 26.11.2025
(73) Proprietor: SN BIOTECH TECHNOLOGIES SPÓLKA Z OGRANICZONA ODPOWIEDZIALNOSCIA SPOLKA KOMANDYTOWA, 62-002 Suchy Las (PL); Woznica Zenon Chemini, 60-194 Poznan (PL); Agromix Spolka Z Ograniczona Odpowiedzialnoscia, 32-007 Niepolomice (PL)
(72) Inventor: WO NICA, Zenon, 60-194 Pozna (PL)
(74) Representative: JWP Patent & Trademark Attorneys
(86) International application number: PCT/IB2024/050382
(87) International publication number: WO 2024/154040

(56) References cited:
- EP-A1- 2 341 778
- WO-A1-2015/103192
- WO-A1-93/22917
- WO-A2-2010/100039
- US-B2- 8 877 682
- US-B2- 9 332 763

## Description

The subject of the invention is an adjuvant composition, in particular for agrochemicals, having properties that modify the working liquid of pesticides and multi-directionally activate their action, the method for manufacture and use thereof.

A number of adjuvant compositions are known in state of the art. The requirements of today's crop protection market, coupled with food safety and environmental protection policies, are the driving force for the development of new, more advanced multifunctional adjuvants for pesticides, at the same time enabling to achieve: higher biological efficacy of pesticides and an efficient process of production, distribution and use in field conditions, e.g. owing to low viscosity and stability in the spray liquid.

US5356861 discloses a homogeneous mixture for use with a herbicide containing, but not limited to, water, a surfactant, and ammonium sulfate. The adjuvant mixture described therein is intended as an additive to the sprayer tank containing water and glyphosate herbicide ready for use in the field. It has been further disclosed that the surfactant from the group of alkyl polysaccharides allows its compatible combination with ammonium sulfate in the adjuvant composition and then with glyphosate in the sprayer tank.

US10701932B2 discloses a composition containing dicamba and a drift control agent for preparation in a sprayer tank immediately prior to field use. The drift control agent contains at least one fatty alcohol and, in addition to the fatty alcohol, may also contain a fatty alcohol alkoxide. Additionally, the disclosed composition may contain polydimethylsiloxane as an antifoam. In turn, surfactants include, but are not limited to: non-ionic surfactants, including ethoxylated fatty acid esters and alkyl polyglycosides. This composition in the sprayer tank may interact with additional pesticides, including glyphosate or glufosinate.

US8877682B2 discloses dry, flowable adjuvant compositions comprising a polysaccharide and a salt composition, respectively, wherein the salt is diammonium hydrogen phosphate, sodium carbonate or a combination thereof, and the polysaccharide is a derivatised guar. It is further disclosed therein that an aqueous composition may be prepared which further comprises a dispersant such as, for example, a polyethoxylated or polypropoxylated fatty alcohol or a polyethoxylated sorbitan fatty acid ester and, additionally, also, among others, complexing agents such as ammonium sulfate and antifoams etc. The document also describes the use of the adjuvant composition, as described therein, to prepare an aqueous working solution with a herbicidal active substance (for example, glyphosate) in the sprayer tank immediately before its use.

US 2016/0227768A1 discloses an aqueous adjuvant concentrate containing: a potassium salt, at least one surfactant and hydroxypropyl tamarind gum dissolved therein. Furthermore, the possibility of preparing a spray liquid containing an adjuvant composition as described therein and at least one suitable herbicide is disclosed therein. The group of beneficial surfactants includes, but is not limited to: polyethoxylated alcohols with 8 to 24 carbon atoms, polyethoxylated sorbitan fatty acid esters and alkyl polyglycosides. The herbicidal spray liquid described therein formed in the sprayer tank from the disclosed adjuvant concentrate may further contain conventional additives such as thickeners, buffers, bulking agents and antifoaming agents. According to the disclosure, the herbicide present in the working liquid may be glyphosate or glufosinate, and the working liquid itself, as described, exhibits optimal properties in the context of controlling the drift of droplets and retaining them on the sprayed surface.

US20210127665A1 discloses a spray liquid composition typically formed in a sprayer tank containing water, an agrochemical composition, e.g. pesticide, at least one oil adjuvant emulsion to reduce drop drift of the composition according to the document, and at least one adjuvant to reduce spray drift. The oil emulsion, according to the cited document, may contain, without being limited to: one or more surfactants selected from the group consisting of alkoxylated alcohols, dimethylpolysiloxane, alkyl polyglycosides, polyoxyethylene sorbitan monolaurate, etc., acting as emulsifying agents. A silicone-based antifoaming agent and, for example, ammonium sulfate and additional water conditioning components may be further added to the composition. Also disclosed therein is an agrochemical composition that may include at least one pesticide, fertiliser, and combinations thereof. The examples of herbicides include, but are not limited to: glyphosate and glufosinate.

US9332763B2 discloses an aqueous adjuvant concentrate capable of reducing droplet drift during spraying treatment and a method of preparing said concentrate. One of the variants of the aqueous adjuvant concentrate assumes the presence of, without being limited to, ammonium sulfate, anionic alkyl polyglycoside esters and hydroxypropyl guar gum. The disclosed composition is stable and can be used as an additive to a spray liquid containing appropriate plant protection agents, such as, but not limited to glyphosate or glufosinate. In addition to the components listed above, other conventional additives may be further present in the sprayer tank's herbicide spray liquid solutions prepared in the manner disclosed therein.

EP2341778B1 discloses a liquid, concentrated herbicide composition containing glyphosate as an active ingredient and a mixture of modifying and activating adjuvants with multifunctional action incorporated into the formulation. The said composition contains a mixture of adjuvants, preferably comprising at least one surfactant, such as an alkyl polyglycoside, ammonium sulfate, carboxylic acid, and additional substances. Furthermore, the specification also mentions triethanolamine in combination with glycerol as an acceptable component of the composition according to the document, which is intended to ensure its homogeneity. Furthermore, the embodiments mention an additional component in the form of Struktol^{®} SB 2032, which acts as an antifoam and, according to the specification, contains modified fatty alcohols.

The adjuvant compositions disclosed in the art are compositions containing various combinations of components typically intended to prepare a spray liquid in a sprayer tank for short-term use, which, if combined in any other way according to the knowledge available to a person skilled in the art, would not form a stable adjuvant composition, even more so a stable pesticide formulation, and therefore the functions of these components could not be fully used. Therefore, specifications of ready-to-use adjuvants (sellable products) combining so many interacting components with diverse functions important for the effectiveness of pesticides are missing in the state of the art. The state of the art does not disclose solutions that combine, in a lasting and stable manner, the active pesticide substances with a similarly large number of components that synergistically support their action (ready-to-use, commercial pesticide formulations). This results directly from the aforementioned inability to combine some chemically different components together in one stable and ready-to-use composition and due to the unfavourable functional properties of the formulations created from thereof, including the instability of the adjuvant/pesticide formulation/composition, excess viscosity of such compositions, as well as low stability of the spray liquid after adding such formulations to the spray tank, resulting from precipitation or separation of components. The state of the art further shows that the methods used to prepare adjuvant compositions are usually standard methods known in the art (mainly mixing with water in a sprayer tank immediately prior to agrochemical treatment), which do not allow the formation of a stable formulation of components (finished, sellable products) previously unavailable in the state of the art while maintaining the functional properties of the target adjuvant composition.

The goal of the invention was to develop an adjuvant composition combining highly chemically diverse components with specific usefulness in plant protection, the combination of which in a single formulation would ensure high utility values of the entire composition and, further, provide it with improved viscosity parameters and full solubility in water, allowing the use of this composition in field conditions. However, the primary goal was to develop a composition that would comprehensively solve a number of problems occurring when using plant protection products, which were only selectively met by adjuvant compositions known in the art. The further goal of the invention was to develop a method that would allow for combining all the desired components and preparing a stable composition from which none of the components precipitate and whose components do not separate. Where such desired stability was to apply to both the ready-to-use, sellable product(s), which was to be a multifunctional adjuvant, and the ready-made, sellable pesticide(s) (two separate product categories). Such an adjuvant composition, regardless of the product category, could be produced on an industrial scale, would ensure higher pesticide activity, with the simultaneous possibility of reducing the doses used, which would translate into a reduced chemical footprint in food production, as well as lower pollution of both the agricultural and peri-agricultural environment.

The subject of the invention is an adjuvant composition, particularly for the activation of agrochemicals, containing water, ammonium sulfate, hydroxypropyl guar gum, at least one surfactant, silicone antifoaming agent, characterised in that it contains oleyl alcohol and the surfactant is selected from the group consisting of at least one
a combination of an alkyl polyglycoside with polyethoxylated sorbitan monolaurate with a ratio expressed in wt.% of 14 to wt.%: 3 to 6 wt.%, or
a combination of an alkylpolyglycoside with an alkoxylated fatty alcohol with a proportion expressed in 14 to 17 wt.%: 3 to 6 wt.%,
and the ratios of water: ammonium sulfate: hydroxypropyl guar gum: surfactant: silicone antifoam: oleyl alcohol expressed in wt.% with respect to the total adjuvant composition is 35 to 47 wt.%: 25 to 34 wt.%: 1.5 to 2 wt.%: 17 to 22 wt.%: 0.03 to 0.07 wt.%: 4 .5 to 5.5 wt.%, respectively.

Preferably, the silicone antifoaming agent is octamethylcyclotetrasiloxane.

Preferably, at least one alkoxylated fatty alcohol is a mixture of polyethoxylated and polypropoxylated alcohols having 16 to 18 carbon atoms.

Preferably, the composition further comprises a pH buffer.

More preferably, the pH buffer is triethanolamine, the content of which, expressed in wt.% is between 6 to 8 wt.%.

Preferably, the viscosity of the composition is in the range of 2000 to 3000 MPa·s at 20 °C.

The further subject of the invention is a method of preparing an adjuvant composition according to the invention, characterised in that it includes the stages:
Stage 1. Mixing water, ammonium sulfate and at least one surfactant to form a mixture A in the ratio of 35 to 47 wt.%: 25 to 34 wt.%: 17 to 22 wt.%, respectively, whereas the surfactant is selected from the group consisting of at least one
   a combination of alkyl polyglycoside with polyethoxylated sorbitan monolaurate with a proportion expressed in wt.% from 14 to 17 wt.%: 3 to 6% wt.%, or
   a combination of an alkylpolyglycoside with an alkoxylated fatty alcohol with a proportion expressed in wt.% from 14 to 17% wt.%: 3 to 6% wt.%.
Stage 2. Mixing oleyl alcohol, silicone antifoaming agent and hydroxypropyl guar gum to form a mixture B at a ratio of 4.5 to 5.5 wt.% : 0.03 to 0.07 wt.%: 1.5 to 2 wt.%, respectively;
Stage 3. Adding mixture B to mixture A while continuously stirring mixture A and continued stirring after combining mixtures A and B; with the ratios of the components expressed in wt.% in the final mixture from Stage 3.

Preferably, Stage 1 is carried out for a time ranging from 20 minutes to 40 minutes, at a temperature ranging from 20 to 35 °C with a stirring speed ranging from 50 to 200 rpm.

Preferably, Stage 2 is carried out for a time ranging from 3 to 7 minutes.

Preferably, in Stage 3, the combined mixtures A and B were mixed for a time ranging from 8 to 12 minutes at a speed ranging from 50 to 200 rpm.

Preferably, after preparation of mixture A in Stage 1, a pH buffer is added to it and stirring is continued for a time ranging from 3 to 5 minutes.

More preferably, the pH buffer is triethanolamine in a quantity expressed in wt.% ranging between 6 to 8 wt.%.

Preferably, the surfactant is a combination of an alkyl polyglycoside with a polyethoxylated sorbitan monolaurate at a ratio expressed in wt.% of 14 to 17 wt.%: 3 to 6 wt.%.

Preferably, the surfactant refers to a combination of an alkyl polyglycoside with an alkoxylated fatty alcohol at a ratio expressed in wt.% of 14 to 17 wt.%: 3 to 6 wt.%.

Preferably, at least one alkoxylated fatty alcohol is a mixture of polyethoxylated and polypropoxylated alcohols having 16 to 18 carbon atoms.

Preferably, the silicone antifoam is octamethylcyclotetrasiloxane.

The further subject of the invention is the use of the adjuvant composition according to the invention for preparing a mixture with agrochemical active substances, whereas the mixture is being selected from the group including stable, ready-to-use mixtures incorporated into the formulations of agrochemical active substance(s) and mixtures added immediately prior to spraying to the sprayer tank, in which the agrochemical active substance(s) is carried.

Preferably, the agrochemical active substance is selected from the groups comprising: glyphosate isopropylamine salt, glyphosate ammonium salt, glyphosate potassium salt, glyphosate trimethylsulfonium salt and glufosinate ammonium as a mixture of the D and L isomer and the L form alone; acetyl-CoA carboxylase inhibitors: quizalofop, cycloxydim, pinoxaden and others; ALS inhibitors: imazamox, foramsulam, thiencarbazone and others; photosystem l inhibitors: diquat and others, photosystem II inhibitors: phenmedipham, bentazon and others; carotenoid biosynthesis inhibitors: mesotrione and others; and synthetic auxins: 2,4-D, MCPA, dicamba and others, as well as other foliar herbicides, fungicides, insecticides and growth regulators, as well as mixtures of thereof.

Preferably, the agrochemical active substance is selected from a group comprising glyphosate isopropylamine salt, glyphosate ammonium salt, glyphosate potassium salt, glyphosate trimethylsulfonium salt and glufosinate ammonium (both in the form of the D and L isomer).

Preferably, the quantity of agrochemical active substance in the mixture ranges from 120 to 450 g in 1 l, preferably 120 to 360 g/l, more preferably 120 to 300 g/l, most preferably 120 to 200 g/l.

Research on the adjuvant composition according to the invention comprised many stages. First, work was undertaken on the introduction of hydroxypropyl guar gum (HPG), a substance that prevents the drift of spray liquid droplets into the mixture containing water, ammonium sulfate and a surfactant from the group of alkyl polyglycosides with a carbon chain length of C8-C10 (Atlox AL-2575 LQ by Croda in this case). HPG, after being introduced into the above-mentioned mixture, did not disperse completely and quickly, forming compact particles, which necessitated long-term mixing to obtain a homogeneous mixture. After obtaining a homogeneous mixture, HPG settled to the bottom of the composition after a few minutes. It was also difficult to add a silicone antifoaming agent, such as octamethylcyclotetrasiloxane (for example, SAG 1599). Despite prolonged mixing and attempts to disperse it in the mixture, the substance floated to the surface over time and adhered to the walls of the containers in which the mixing took place, especially to the walls of plastic containers. It should be emphasised that adding an anti-foaming agent was necessary due to the strong foaming of the spray liquid caused by an alkyl polyglycoside surfactant. An exemplary composition of such unstable compositions is given in Table 1. These are composition 1 and composition 2, which additionally contain triethanolamine (TEA) with a buffering effect on the pH of the spray liquid so that it is higher than 7, which is important for the full dissolution of sulfonylurea herbicides, with which this composition is to be combined in the sprayer tank. Subsequent studies unexpectedly showed that the introduction of an HPG anti-drift agent and an octamethylcyclotetrasiloxane antifoam agent into a mixture of water, ammonium sulfate and alkyl polyglycoside and obtaining a stable composition is possible and can be significantly facilitated after the initial mixing of HPG and octamethylcyclotetrasiloxane in oleyl alcohol (containing this alcohol was used commercial preparation Rofanol 90/95 V) and then adding it to the remaining adjuvant components.

Therefore, in the course of research, a method according to the invention was developed, which turned out to be effective in preparing adjuvant compositions according to the invention. It takes place in three stages and involves dissolving ammonium sulfate and alkyl polyglycoside in water (mixture A), then preparing mixture B by mixing oleyl alcohol with HPG and a silicone antifoam agent - octamethylcyclotetrasiloxane. The third stage is to add mixture B to mixture A while mixing it. The examples of compositions obtained in this way are composition 3 and composition 4 (Table 1), in which triethanolamine (TEA) is additionally present as a buffering agent. In the ageing test, these compositions remained homogeneous for at least 14 days at 0, 20 and 54 °C temperatures. Unfortunately, the mentioned compositions 3 and 4, although they did not delaminate, were characterised by too high viscosity, which constitutes a significant obstacle to their production and practical use (e.g. difficult to fill and empty containers, difficult to transport in pipes, etc.). Moreover, it turned out that these compositions used in low concentrations (after dilution to the appropriate use concentration) were unstable because they precipitated from the spray liquid in the form of water-insoluble flocks (fine gel structures). This behaviour completely excludes their usefulness as adjuvants supporting the action of plant protection products, as it leads to clogging of the spraying equipment and consequently makes it impossible to perform the spraying treatment.

**Table 1. Examples of reference compositions and their selected functional properties**

| **Component** | **Adjuvant compositions** | | | |
|---|---|---|---|---|
| | Composition 1 | Composition 2 | Composition 3 | Composition 4 |
| | % by weight | | | |
| Water | 46.2 | 38.7 | 44.5 | 38.5 |
| Ammonium sulfate | 32.0 | 32.0 | 29.0 | 30.0 |
| Akylpolyglycoside | 20.0 | 20.0 | 20.0 | 18.0 |
| Triethanolamine (TEA) | - | 7.5 | - | 7.5 |
| Oleyl alcohol | - | - | 4.7 | 5.2 |
| Octamethylcyclotetrasiloxane | 0.05 | 0.05 | 0.05 | 0.05 |
| HPG | 1.75 | 1.75 | 1.75 | 1.75 |
| **Selected functional properties of the composition** | | | | |

| Form (after 14 days at 0, 20 and 54 °C) | Separation of ingredients | Separation of ingredients | Homogeneous | Homogeneous |
|---|---|---|---|---|
| Dynamic viscosity (mPa·s) * | 224 low | 272 low | 3876 too high | 3715 too high |
| Stability in spray liquid (1.5 l/100 l of water) | Not tested | Not tested | Stable | Stable |
| Stability in spray liquid (1.5 l/200 l of water) | Not tested | Not tested | Precipitates insoluble in water | Precipitates insoluble in water |
| pH (1.5 l/ 200 l of water) | Not tested | Not tested | 6.9 | 8.1 |

| | | | | |
|---|---|---|---|---|
| *determined using a Brookfield DV2T viscometer at 20 rpm, 20°C | | | | |

Further research on the composition and the method of its preparation according to the invention showed that replacing part of the alkyl polyglycoside - non-ionic surfactant without ethoxy groups with polyethoxylated sorbitan monolaurate (e.g. Tween 20) or non-ionic surfactants containing ethoxylated or propoxylated C16-18 alcohols, or their mixture (e.g. the preparation Rokanol RZ4P11) allows you to reduce the viscosity to the limits accepted in industry and agricultural practice of using pesticides (below 3000 mPa.s at 20 °C). Moreover, it also allows to eliminate the precipitation of components of the adjuvant composition from the spray liquid in the form of water-insoluble flocks (fine gel structures), especially when used at low concentrations. The composition of these adjuvant compositions according to the invention is given in Table 2 below - these are compositions 5-8. These compositions were also obtained by the three-stage method of the invention. In the first stage, mixture A was prepared by mixing appropriate amounts of water, ammonium sulfate, alkyl polyglycoside and polyethoxylated sorbitan monolaurate or appropriate polyethoxylated, polypropoxylated C16-18 alcohols or a mixture thereof, then mixture B was prepared as described above, and in the third stage, mixture B was added to the mixture A while mixing it. The obtained compositions, according to the invention, were characterised by viscosity acceptable in industry and agricultural practice, maintained homogeneity after being stored in the ageing test at temperatures of 0, 20 and 54 °C for 14 days, and did not precipitate in the spray liquid (they were stable), even after being used in low dose or high dilution.

In addition to increasing the effectiveness of pesticides, the advantage of the adjuvant composition according to the invention obtained by the method according to the invention is its stability, as well as acceptable viscosity both in the production and packaging process, as well as in agricultural practice. Thanks to the method according to the invention, it was possible not only to combine components that so far could not coexist in one adjuvant composition but also to obtain a composition according to the invention that performs many functions important from the point of view of plant protection at the same time. The components used in it limit the negative impact of calcium and magnesium ions contained in the water used to prepare the spray liquid on the effectiveness of pesticides, limit the drift of small drops of the spray liquid with the wind during application, significantly increase the retention of drops and enable better wetting of the surface, which is sprayed, limits the too quick drying of drops from the surface, relaxes the cuticle (the main barrier to the penetration of pesticides into cells) and enhances the active uptake and transport of the active substance into cells. Thanks to this, the composition, according to the invention, has a multi-directional effect, which significantly facilitates the treatment, increases its effectiveness, and, most importantly, allows reducing the doses of pesticides used and, consequently, reducing their potential harmful impact on the environment and agricultural products. Moreover, the mentioned improved viscosity parameters enable the use of the compositions according to the invention in field conditions using commonly used spraying equipment. At the same time, it should be mentioned that the adjuvant composition is suitable for use with agrochemically active substances, especially herbicides, both thanks to the possibility of permanent incorporation into a pesticide formulation that is stable for at least 3 years and, as an independent, ready-made product, it can be mixed with plant protection products in field conditions, in the sprayer tank immediately before use. Moreover, field tests have shown that it improves the effectiveness of agrochemically active substances regardless of whether the adjuvant composition, according to the invention, is added to the sprayer tank just before use or is part of a ready-made, stable pesticide formulation.

The invention is illustrated by the following embodiments.

### Examples of implementation

The examples of performance describe compositions according to the invention created from preparations available in trade, such as ATLOXAL-2575 LQ containing a surfactant belonging to the alkyl polyglycosides group, Rokanol RZ4P11, which is a mixture of ethoxylated and propoxylated alcohols C16-18, Tween 20 containing polytestoxized monolaurin sorbitan, Sag 1599 containing octamethylcyclotetrasiloxane as a silicone antifoaming agent JK-AD, which is a preparation of hydroxypropyl guar gum (HPG) and Rofanol 90/95, which is a preparation of oleyl alcohol.

### Example 1

The adjuvant compositions of the invention (compositions 5-8) are disclosed in Table 2. The table also shows the functional properties of the individual compositions.

**Table 2. Adjuvant compositions according to the invention and their selected functional properties**

| **Component** | **Adjuvant compositions** | | | |
|---|---|---|---|---|
| | Composition 5 | Composition 6 | Composition 7 | Composition 8 |
| | % by weight | | | |
| Water | 44.5 | 37.5 | 44.5 | 37.5 |
| Ammonium sulfate | 29.0 | 28.0 | 29.0 | 28.0 |
| Alkylpolyglycoside | 15.0 | 15.0 | 15.0 | 15.0 |
| Polyethoxylated sorbitan monolaurate | 5.0 | 5.0 | ^B | ^B |
| A mixture of ethoxylated and propoxylated C16-18 alcohols | ^B | ^B | 5.0 | 5.0 |
| Triethanolamine | ^B | 7.5 | ^B | 7.5 |
| Oleyl alcohol | 4.7 | 5.2 | 4.7 | 5.2 |
| Octamethylcyclotetrasiloxane | 0.05 | 0.05 | 0.05 | 0.05 |
| HPG | 1.75 | 1.75 | 1.75 | 1.75 |
| Form (after 14 days at 0, 20 and 54 °C) | Homogeneous | Homogeneous | Homogeneous | Homogeneous |
| Dynamic viscosity (mPa·s)^{a} | 2424 acceptable | 2316 acceptable | 2454 acceptable | 2480 acceptable |
| Stability in spray liquid (1.5 l/100 l of water) | Stable | Stable | Stable | Stable |
| Stability in spray liquid (1.5 l/200 l of water) | Stable | Stable | Stable | Stable |
| pH (1.5 l/200 l of water) | 7.0 | 8.0 | 6.9 | 8.1 |

| | | | | |
|---|---|---|---|---|
| ^{a}determined using a Brookfield DV2T viscometer at 20 rpm, 20 °C | | | | |

As already mentioned above, the method, according to the invention, involves the preparation of the adjuvant composition according to the invention in three stages and includes preparing mixture A, preparing mixture B, and then combining both mixtures by adding mixture B to the mixed mixture A.

Adjuvant compositions prepared by the method according to the invention can be added to the sprayer tank during the preparation of spray liquid for plant protection (spraying liquid in the sprayer tank = water + pesticide + adjuvant composition) or incorporated into herbicide formulations at the stage of their production (product [,, built-in"] = pesticide + adjuvant composition).

### Example 2. Method for preparing reference composition 3

This example gives a method for preparing reference composition 3 weighing 1 kg using the method according to the invention:

### Stage I. Preparation of the mixture A

Added to a 1-litre beaker:
1. 445 g of water;
2. 290 g of ammonium sulfate;
3. 200 g of alkyl polyglycoside (AtloxAL-2575 LQ);

The whole was mixed using a propeller mixer at 100 rpm for 0.5 hour until the ammonium sulfate was completely dissolved and a homogeneous, transparent solution was obtained. In order to accelerate the dissolution process, the mixture temperature was maintained at 30 °C during mixing.

### Stage II. Preparation of mixture B

Added to a 100 ml beaker:
1. 47 g of oleyl alcohol (Rofanol 90/95);
2. 0.5 g octamethylcyclotetrasiloxane (SAG 1599);
3. 17.5 g of hydroxypropyl guar gum - HPG (JK-AD preparation).

The whole was mixed using a magnetic stirrer for 5 minutes until a homogeneous, non-transparent suspension was obtained.

### Stage III. Preparation of composition 3

The obtained mixture B was completely added to the previously obtained mixture A while stirring with a propeller mixer at 100 rpm. Mixing was continued for approximately 10 minutes until a homogeneous, thickened and non-transparent beige mixture was obtained with a density of 1.21 g/cm³. The samples of this composition stored for 2 weeks at 0, 20 and 54 °C showed complete stability (no separation of components).

The table below shows the composition of reference composition 3 in wt.% and in g/kg of product:

| **No** | **Components** | **% by weight** | **g/kg** |
|---|---|---|---|
| **1** | Water | 44.50 | 445.00 |
| **2** | Ammonium sulfate | 29.00 | 290.00 |
| **3** | Alkylpolyglycoside (Atlox AL-2575 LQ) | 20.00 | 200.00 |
| **4** | Oleyl alcohol (Rofanol 90/95 V) | 4.70 | 47.00 |
| **5** | Octamethylcyclotetrasiloxane (SAG 1599) | 0.05 | 0.50 |
| **6** | HPG (JK-AD) | 1.75 | 17.50 |

### Example 3. Method for preparing reference composition 4

This example gives a method for preparing the reference composition 4 weighing 1 kg using the method according to the invention:

### Stage I. Preparation of mixture A

Added to a 1-litre beaker
- 1.: 385 g of water;
- 2.: 300 g of ammonium sulfate;
- 3.: 180 g of alkyl polyglycoside (Atlox AL-2575 LQ).

The whole was mixed using a propeller mixer at 100 rpm for 0.5 hour until the ammonium sulfate was completely dissolved and a homogeneous, transparent solution was obtained. In order to accelerate the dissolution process, the mixture temperature was maintained at 30 °C during mixing.

After mixing components No. 1-3, component No. 4 was added:
4. 75 g of triethanolamine (TEA), acting as a pH buffer, and stirring was continued for 5 min.

### Stage II. Preparation of mixture B

Added to a 100 ml beaker:
- 1.: 52 g of oleyl alcohol (Rofanol 90/95);
- 2.: 0.5 g octamethylcyclotetrasiloxane (SAG 1599);
- 3.: 17.5 g HPG (JK-AD).

The whole was mixed using a magnetic stirrer for 5 minutes until a homogeneous, non-transparent suspension was obtained.

### Stage III. Preparation of a reference composition 4

The obtained mixture B was completely added to the previously obtained mixture A while stirring with a propeller mixer at 100 rpm. Mixing was continued for approximately 10 minutes until a homogeneous, thickened and non-transparent beige mixture was obtained with a density of 1.21 g/cm³. The samples of this composition stored for 2 weeks at 0.20 and 54 °C showed complete stability (no separation of components).

The table below shows the composition of composition 4 in wt.% and in g/kg of product:

| **No.** | **Components** | **% by weight** | **g/kg** |
|---|---|---|---|
| **1** | Water | 38.50 | 385.00 |
| **2** | Ammonium sulfate | 30.00 | 300.00 |
| **3** | Akylpolyglycoside (Atlox AL-2575 LQ) | 18.00 | 180.00 |
| **3** | Triethanolamine (TEA) | 7.50 | 75.00 |
| **4** | Oleyl alcohol (Rofanol 90/95 V) | 5.20 | 52.00 |
| **5** | Octamethylcyclotetrasiloxane (SAG 1599) | 0.05 | 0.50 |
| **6** | HPG (JK-AD) | 1.75 | 17.50 |

### Example 4. Method for preparing composition 5 according to the invention

This example gives a method for preparing composition 5 according to the invention with a mass of 1 kg according to the method according to the invention:

### Stage I. Preparation of mixture A

Added to a 1-litre beaker:

| | |
|---|---|
| 1. | 445 g of water; |
| 2. | 290 g of ammonium sulfate; |
| 3. | 150 g of alkyl polyglycoside (Atlox AL-2575 LQ); |
| 4. | 50 g of polyethoxylated sorbitan monolaurate (Tween 20). |

The whole was mixed using a propeller mixer at 100 rpm for 0.5 hour until the ammonium sulfate was completely dissolved and a homogeneous, transparent solution was obtained. In order to accelerate the dissolution process, the mixture temperature was maintained at 30 °C during mixing.

### Stage II. Preparation of mixture B

Added to a 100 ml beaker:

| | |
|---|---|
| 1. | 47 g of oleyl alcohol (Rofanol 90/95). |
| 2. | 0.5 g octamethylcyclotetrasiloxane (SAG 1599); |
| 3. | 17.5 g HPG (JK-AD). |

The whole was mixed using a magnetic stirrer for 5 minutes until a homogeneous, non-transparent suspension was obtained.

### Stage III. Preparation of composition 5 according to the invention

The obtained mixture B was completely added to the previously obtained mixture A while stirring it with a propeller mixer at 100 rpm. Mixing was continued for approximately 10 minutes until a homogeneous, thickened and non-transparent beige mixture was obtained with a density of 1.21 g/cm³. The samples of this composition stored for 2 weeks at 0, 20 and 54 °C showed complete stability (no separation of components).

The table below shows the composition of composition 5 according to the invention in wt.% and in g/kg of product:

| **No.** | **Components** | **% by weight** | **g/kg** |
|---|---|---|---|
| **1** | Water | 44.50 | 445.0 |
| **2** | Ammonium sulfate | 29.00 | 290.0 |
| **3** | Alkylpolyglycoside (Atlox AL-2575) | 15.00 | 150.0 |
| **4** | Polyethoxylated monolaurate Sorbitan (Tween 20) | 5.00 | 50.0 |
| **5** | Oleyl alcohol (Rofanol 90/95 V) | 4.70 | 47.0 |
| **6** | Octamethylcyclotetrasiloxane SAG 1599 | 0.05 | 0.50 |
| **7** | (HPG) JK-AD | 1.75 | 17.5 |

### Example 5. Method for preparing composition 6 according to the invention

This example gives a method for preparing composition 6 according to the invention with a mass of 1 kg according to the method according to the invention:

### Stage I. Preparation of mixture A

Added to a 1-litre beaker:

| | |
|---|---|
| 1. | 375 g of water; |
| 2. | 280 g of ammonium sulfate; |
| 3. | 150 g of alkyl polyglycoside (Atlox AL-2575); |
| 4. | 50 g of polyethoxylated sorbitan monolaurate (Tween 20). |

The whole was mixed using a propeller mixer at 100 rpm for 0.5 hour until the ammonium sulfate was completely dissolved and a homogeneous, transparent solution was obtained. In order to accelerate the dissolution process, the mixture temperature was maintained at 30 °C during mixing.

After mixing components 1-4, component 5 was added:

| | |
|---|---|
| 5. | 75 g of triethanolamine (TEA), |

and stirring was continued for 5 min.

### Stage II. Preparation of mixture B

Added to a 100 ml beaker:

| | |
|---|---|
| 1. | 52 g of oleyl alcohol (Rofanol 90/95); |
| 2. | 0.5 g octamethylcyclotetrasiloxane (SAG 1599); |
| 3. | 17.5 g (JK-AD). |

The whole was mixed using a magnetic stirrer for 5 minutes until obtaining homogeneous non-transparent suspension.

### Stage III. Preparation of composition 6 according to the invention

The obtained mixture B was completely added to the previously obtained mixture A while stirring it with a propeller mixer at 100 rpm. Mixing was continued for approximately 10 minutes until a homogeneous, thickened and non-transparent beige mixture was obtained with a density of 1.21 g/cm³. The samples of this composition stored for 2 weeks at 0, 20 and 54 °C showed complete stability (no separation of components).

The table below shows the composition of composition 6 according to the invention in wt.%. and in g/kg of product:

| **No.** | **Components** | **% by weight** | **g/kg** |
|---|---|---|---|
| **1** | Water | 37.50 | 375 |
| **2** | Ammonium sulfate | 28.00 | 280 |
| **3** | Alkylpolyglycoside (Atlox AL-2575) | 15.00 | 150 |
| **4** | Polyethoxylated sorbitan monolaurate (Tween 20) | 5.0 | 50 |
| **5** | Triethanolamine (TEA) | 7.50 | 75 |
| **6** | Oleyl alcohol (Rofanol 90/95 V) | 5.20 | 52 |
| **7** | Octamethylcyclotetrasiloxane (SAG 1599) | 0.05 | 0.5 |
| **8** | HPG (JK-AD) | 1.75 | 17.5 |

### Example 6. Method for preparing composition 7 according to the invention

This example gives a method for preparing composition 7 according to the invention with a mass of 1 kg using the method according to the invention:

### Stage I. Preparation of mixture A

Added to a 1-litre beaker:

| | |
|---|---|
| 1. | 445 g of water; |
| 2. | 290 g of ammonium sulfate; |
| 3. | 150 g of alkylpolyglucoside (AtloxAL-2575 LQ); |
| 4. | 50 g of a mixture of ethoxylated and propoxylated C16-18 alcohols (Rokanol RZ4P11). |

The whole was mixed using a propeller mixer at 100 rpm for 0.5 hour until the ammonium sulfate was completely dissolved and a homogeneous, transparent solution was obtained. In order to accelerate the dissolution process, the mixture temperature was maintained at 30 °C during mixing.

### Stage II. Preparation of mixture B

Added to a 100 ml beaker:

| | |
|---|---|
| 1. | 47 g of oleyl alcohol (Rofanol 90/95). |
| 2. | 0.5 g octamethylcyclotetrasiloxane (SAG 1599); |
| 3. | 17.5 g HPG (JK-AD). |

The whole was mixed using a magnetic stirrer for 5 minutes until a homogeneous, non-transparent suspension was obtained.

### Stage III. Preparation of composition 7 according to the invention

The obtained mixture B was completely added to the previously obtained mixture A while stirring it with a propeller mixer at 100 rpm. Mixing was continued for approximately 10 minutes until a homogeneous, thickened and non-transparent beige mixture was obtained with a density of 1.21 g/cm³. The samples of this composition stored for 2 weeks at 0, 20 and 54 °C showed complete stability (no separation of components).

The table below shows the composition of composition 7 according to the invention in wt.% and in g/kg of product:

| **No.** | **Components** | **% by weight** | **g/kg** |
|---|---|---|---|
| **1** | Water | 44.50 | 445.0 |
| **2** | Ammonium sulfate | 29.00 | 290.0 |
| **3** | Alkylpolyglycoside (Atlox AL-2575) | 15.00 | 150.0 |
| **4** | Mixture of ethoxylated and propoxylated C16-18 alcohols (Rokanol RZ4P11) | 5.00 | 50.0 |
| **5** | Oleyl alcohol (Rofanol 90/95 V) | 4.70 | 47.0 |
| **6** | Octamethylcyclotetrasiloxane (SAG 1599) | 0.05 | 0.50 |
| **7** | (HPG) JK-AD | 1.75 | 17.5 |

### Example 7. Method for preparing composition 8 according to the invention

This example gives a method for preparing composition 8 according to the invention with a mass of 1 kg according to the method according to the invention:

### Stage I. Preparation of mixture A

Added to a 1-litre beaker:

| | |
|---|---|
| 1. | 375 g of water; |
| 2. | 280 g of ammonium sulfate; |
| 3. | 150 g of alkyl polyglycoside (Atlox AL-2575); |
| 4. | 50 g of a mixture of ethoxylated and propoxylated C16-18 alcohols (Rokanol RZ4P11). |

The whole was mixed using a propeller mixer at 100 rpm for 0.5 hour until the ammonium sulfate was completely dissolved and a homogeneous, transparent solution was obtained. In order to accelerate the dissolution process, the mixture temperature was maintained at 30 °C during mixing.

After mixing components 1-4, component 5 was added:

| | |
|---|---|
| 5. | 75 g of triethanolamine (TEA), and stirring was continued for 5 min. |

### Stage II. Preparation of mixture B

Added to a 100 ml beaker:

| | |
|---|---|
| 1. | 52 g of oleyl alcohol (Rofanol 90/95); |
| 2. | 0.5 g octamethylcyclotetrasiloxane (SAG 1599); |
| 3. | 17.5 g (JK-AD). |

The whole was mixed using a magnetic stirrer for 5 minutes until a homogeneous, non-transparent suspension was obtained.

### Stage III. Preparation of composition 8 according to the invention

The obtained mixture B was completely added to the previously obtained mixture A while stirring it with a propeller mixer at 100 rpm. Mixing was continued for approximately 10 minutes until a homogeneous, thickened and non-transparent beige mixture was obtained with a density of 1.21 g/cm³. The samples of this composition stored for 2 weeks at 0, 20 and 54 °C showed complete stability (no separation of components).

The table below shows the composition of composition 6 according to the invention in wt.% and in g/kg of product:

| **No.** | **Components** | **% by weight** | **g/kg** |
|---|---|---|---|
| **1** | Water | 37.50 | 375 |
| **2** | Ammonium sulfate | 28.00 | 280 |
| **3** | Alkylpolyglycoside (Atlox AL2575) | 15.00 | 150 |
| **4** | Mixture of ethoxylated and propoxylated C16-18 alcohols (Rokanol RZ4P11) | 5.0 | 50 |
| **5** | Triethanolamine (TEA) | 7.50 | 75 |
| **6** | Oleyl alcohol (Rofanol 90/95 V) | 5.20 | 52 |
| **7** | Octamethylcyclotetrasiloxane (SAG 1599) | 0.05 | 0.5 |
| **8** | HPG (JK-AD) | 1.75 | 17.5 |

In addition, herbicide formulations containing incorporated compositions according to the invention have also been prepared. These formulations contained, respectively, as the herbicidally active agent, the isopropylamine salt of glyphosate (hereinafter glyphosate) or glufosinate ammonium (hereinafter glufosinate) and the adjuvant composition according to the invention. It is also permissible to use other glyphosate salts, such as ammonium, potassium and trimethylsulfonium salts, as well as mixtures of glyphosate with glufosinate in the form of both the D and L isomers of glufosinate and the L-glufosinate form itself, mixtures of glyphosate with 2,4-D, MCPA dicamba, mixtures of glyphosate with glufosinate and 2,4-D, MCPA and dicamba.

Attempts to introduce adjuvant composition 4 to glyphosate and adjuvant composition 3 to glufosinate ammonium (in both cases, these adjuvants did not contain the non-ionic surfactant Tween 20) were unsuccessful (reference formulations 1 and 2 - table 3). It is true that homogeneous herbicide formulations were obtained, but, similarly to the introduced adjuvant compositions, those formulations were characterised by too high viscosity, unacceptable in industry and agricultural practice (the glyphosate formulation) and easily precipitated in the spray liquid. Those problems were completely solved after the introduction of adjuvant composition 6 according to the invention to glyphosate and to glufosinate ammonium in adjuvant composition 5 according to the invention. The obtained herbicide formulations 3 and 4 with the composition of components specified in Table 3 were characterised by a viscosity acceptable in the industry and agricultural practice (below 3000 mPa·s at 20 °C) and remained homogeneous after being stored in the ageing test at temperatures of 0, 20 and 54 °C for 14 days and did not precipitate in the spray liquid (they were stable) even when used at a low dose or in high dilution.

**Table 3. Examples of formulations containing glyphosate and glufosinate ammonium with built-in adjuvant compositions - reference and according to the invention, respectively, and their selected functional properties.**

| **Component** | **Herbicide formulations with built-in adjuvant composition** | | | |
|---|---|---|---|---|
| | Reference formulation 1 | Reference formulation 2 | Formulation 3 | Formulation 4 |
| | g/l | | | |
| Water | 290.0 | 558.0 | 290.0 | 558.0 |
| Ammonium sulfate | 210.0 | 200.0 | 210.0 | 200.0 |
| Polyglycoside (Atlox AL-2575 LQ) | 200.0 | 200.0 | 150.0 | 150.0 |
| Polyethoxylated sorbitan monolaurate (Tween 20) | - | - | 50.0 | 50.0 |
| Glyphosate - IPA salt 62% | 392.0 | - | 392.0 | - |
| Glufosinate ammonium 97.45% | - | 153.9 | - | 153.9 |
| Triethanolamine (TEA) | 49.0 | - | 49.0 | - |
| Oleyl alcohol (Rofanol 90/95 V) | 45.0 | 47.5 | 45.0 | 47.5 |
| Octamethylcyclotetrasiloxane (SAG 1599) | 0.50 | 0.5 | 0.50 | 0.5 |
| HPG (JK-AD) | 15.0 | 17.5 | 15.0 | 17.5 |

| **Selected functional properties of the composition** | | | | |
|---|---|---|---|---|
| Form (after 14 days at 0.20 and 54 °C) | Homogeneous | Homogeneous | Homogeneous | Homogeneous |
| Dynamic viscosity (mPa·s)^{a} | 4270 too high | 5123 too high | 2390 acceptable | 2453 acceptable |
| Stability in spray liquid (1.5 l/100 l of water) | Stable | Stable | Stable | Stable |
| Stability in spray liquid (1.5 l/200 l of water) | Precipitates insoluble in water | Precipitates insoluble in water | Stable | Stable |
| pH (1.5 l/200 l of water) | 5.7 | 7.2 | 5.6 | 7.1 |

| | | | | |
|---|---|---|---|---|
| ^{a}determined using a Brookfield DV2T viscometer at 20 rpm, 20 °C | | | | |

Formulations 3 and 4 were also obtained according to the invention, as shown in the examples below.

### Example 8. Method for preparing the herbicide formulation 3 according to the invention

This example provides a method for preparing a herbicide formulation containing the isopropyl salt of glyphosate as the herbicide active substance and the incorporated adjuvant composition according to the invention according to the following method:

### Stage I. Preparation of mixture A

Added to a 1-litre beaker:

| | |
|---|---|
| 1. | 290 g of water; |
| 2. | 210 g of ammonium sulfate; |
| 3. | 150 g of alkyl polyglycoside (Atlox AL-2575 LQ). |

The whole was mixed using a propeller mixer at 100 rpm for 5 min until the ammonium sulfate was completely dissolved. During mixing, the temperature of the mixture was maintained at 20 °C. Then, the following items were added:

| | |
|---|---|
| 4. | 50 g of polyethoxylated sorbitan monolaurate (Tween 20); |
| 5. | 49 g of triethanolamine (TEA); |
| 6. | 392 g 62% isopropylamine salt (IPA) of glyphosate. Stirring was continued for a further 5 min. |

### Stage II. Preparation of mixture B

Added to a 100 ml beaker:

| | |
|---|---|
| 1. | 45 g of oleyl alcohol (Rofanol 90/95); |
| 2. | 0.5 g octamethylcyclotetrasiloxane (SAG 1599); |
| 3. | 15.0 g HPG (JK-AD). |

The whole was mixed using a magnetic stirrer for 5 minutes until a homogeneous, non-transparent suspension was obtained.

### Stage III. Preparation of herbicide formulation 3

Mixture B was slowly added to the beaker with the prepared mixture A while stirring (100 rpm). Mixing was continued for approximately 10 minutes until a uniform, thickened and non-transparent beige mixture was obtained. The samples of that formulation stored for 2 weeks at 0, 20 and 54 °C showed complete stability (no separation of components).

The table below shows the ingredients of herbicide formulation 3 (g/l of product):

| **No.** | **Components** | **g/l** |
|---|---|---|
| **1** | Water | 290.0 |
| **2** | Ammonium sulfate | 210.0 |
| **3** | Alkylpolyglucoside (Atlox AL-2575 LF) | 150.0 |
| **4** | Polyethoxylated sorbitan monolaurate (Tween 20) | 50.0 |
| **5** | Triethanolamine (TEA) | 49.0 |
| **6** | 62% isopropylamine salt (IPA) of glyphosate | 392.0 |
| **7** | Oleyl alcohol (Rofanol 90/95 V) | 45.0 |
| **8** | Octamethylcyclotetrasiloxane (SAG 1599) | 0.5 |
| **9** | JK-AD (HPG) | 15.0 |

One litre of the herbicide formulation prepared in this way contained 180 g of glyphosate (acid equivalent) and the adjuvant composition, according to the invention, up to a volume of 1 L. The density of the obtained formulation was 1.20 g/cm³. The samples of that formulation stored for 2 weeks at 0, 20 and 54 °C showed full stability (no delamination).

### Example 9. Method of preparing herbal formula 4.

This example provides a method of preparing a herbicide formulation 4 containing glufosinate ammonium as a herbicidally active substance, which is a mixture of D-glufosinate and L-glufosinate (glufosinate isomers) and an incorporated adjuvant composition using the following method:

### Stage I. Preparation of mixture A

Added to a 1-litre beaker:

| | |
|---|---|
| 1. | 558.0 g of water; |
| 2. | 153.93 g 97.45% ammonium glufosinate; |
| 3. | 150 g of alkylpolyglucoside (AtloxAL-2575 LQ); |
| 4. | 50 g of polyethoxidized sorbitan monolaurate (Tween 20); |
| 5. | 200 g of ammonium sulfate. |

The whole was mixed using a propeller mixer at 100 rpm for 0.5 hour until a homogeneous mixture was obtained. During mixing, the temperature of the mixture was maintained at 30 °C.

### Stage II. Preparation of mixture B

Added to a 100 ml beaker:

| | |
|---|---|
| 1. | 47.5 g of oleyl alcohol (Rofanol 90/95); |
| 2. | 0.5 g octamethylcyclotetrasiloxane (SAG 1599); |
| 3. | 17.5 g HPG (JK-AD) |

The whole was mixed using a magnetic stirrer for 5 minutes until a homogeneous, non-transparent suspension was obtained.

### Stage III. Preparation of herbicide formulation 4

Mixture B was slowly added to the beaker with the prepared mixture A while stirring (100 rpm). Mixing was continued for approximately 10 minutes until a uniform, thickened and non-transparent beige mixture was obtained. The samples of that formulation stored for 2 weeks at 0, 20 and 54 °C showed complete stability (no separation of components).

The table below shows the ingredients of herbicide formulation 4 (in g/l of product):

| **No.** | **Components** | **g/l** |
|---|---|---|
| **1** | Water | 558.0 |
| **2** | 97.45% glufosinate ammonium | 153.9 |
| **3** | Alkylpolyglycoside (Atlox AL-2575 LQ) | 150.0 |
| **4** | Polyethoxylated sorbitan monolaurate (Tween 20) | 50.0 |
| **5** | Ammonium sulfate | 200.0 |
| **6** | Oleyl alcohol (Rofanol 90/95 V) | 47.5 |
| **7** | Octamethylcyclotetrasiloxane (SAG 1599) | 0.5 |
| **8** | JK-AD (HPG) | 17.5 |

One litre of herbicide formulation 4 prepared in that way contained 150 g of ammonium glufosinate and the adjuvant composition, according to the invention, up to a volume of 1 litre. The density of the obtained formulation was 1.18 g/cm³. The samples of that formulation stored for 2 weeks at 0, 20 and 54 °C showed full stability (no delamination).

Additionally, the effectiveness of the adjuvant compositions according to the invention and the herbicidal effectiveness of the obtained herbicide formulations in field conditions were assessed.

### Example 10. Testing the effectiveness of the adjuvant composition 5 according to the invention.

The adjuvant composition 5, according to the invention, was tested in a field experiment carried out in 2021 to determine its effect on the herbicidal effectiveness of the herbicide Roundup 360 Plus (glyphosate) in relation to the test plant, which was a mixture of blue phacelia, sunflower, white mustard and oilseed radish. The herbicide Roundup 360 Plus was used at a significantly reduced dose, i.e. 0.5 I/ha (180 g ai/ha), and the effect on the herbicidal effectiveness of the tested composition 5 according to the invention at a dose of 1.5 I/ha was compared with the same dose of the AS 500 SL adjuvant commercial, which includes ammonium sulfate and cationic surfactant. The spraying procedure was carried out in the test plants' 4-6 leaf phase using a boom sprayer equipped with 4 TeeJet-11002VP nozzles, ensuring a spray liquid output of 164 I/ha. The experiment was set up using the parallel strip method, in 4 repetitions, and the area of an individual plot was 10 m². A visual assessment of the herbicidal effectiveness of the herbicide Roundup 360 Plus without and with the tested adjuvants in relation to the test plants was performed 7 and 14 days after the treatment. The results presented in Table 4 indicate that the obtained adjuvant composition 5, according to the invention, activated the herbicidal effectiveness of glyphosate in relation to the test plants much more strongly than the reference adjuvant AS 500 SL, regardless of the evaluation date.

**Table 4. Herbicidal effectiveness of the herbicide Roundup 360 Plus at a dose of 0.5 I/ha (180 g ai/ha) used without an adjuvant, with the reference adjuvant AS 500 SL and adjuvant composition 5 according to the invention in relation to test plants - a mixture of blue phacelia, sunflower, white mustard and oil radish (field tests - Kopaszewo, PL, 2021)**

| Combination | Herbicidal effectiveness in % | |
|---|---|---|
| | 7 days after the procedure | 14 days after the procedure |
| Roundup 360 Plus (0.5 I/ha) | 5 | 17 |
| Roundup 360 Plus (0.5 I/ha) + reference adjuvant AS 500 SL (1.5 I/ha) | 30 | 85 |
| Roundup 360 Plus (0.5 I/ha) + adjuvant composition 5 (1.5 I/ha) | 89 | 100 |
| NIR (p=0.05) | 12.1 | 7.3 |

### Example 11. Testing the herbicidal effectiveness of the herbicide formulation 3 according to the invention.

The herbicide formulation 3, according to the invention, containing 180 g of glyphosate in 1 l was tested in a field experiment set up in an area not used for agriculture in 2022 to determine its herbicidal effectiveness. The weed infestation in the experimental field was dominated by the following weed species: brome sp., cocksfoot, meadow bluegrass, couch grass, common yarrow and white clover. Herbicide formulation 3 was used at a dose of 720 g a.i. of glyphosate and compared with commercial herbicides Roundup 360 Plus (at a dose of 1440 and 720 g a.i./ha) and Halvetic (glyphosate 180 g a.i. in 1 I, with a built-in adjuvant containing ammonium sulfate and a mixture of surfactants with alkylpolyglucoside groups) also at a dose of 720 g a.i./ha. The spraying procedure was carried out in spring at the height of 10-25 cm of test plants using a bicycle boom sprayer equipped with 5 TeeJet-11002VP nozzles, ensuring a spray liquid output of 150 I/ha. The experiment was carried out using the parallel strip method, in 4 repetitions, and the area of an individual plot was 10 m². A visual assessment of the herbicidal effectiveness of the herbicide formulation 3 according to the invention was performed 2 and 6 weeks after the treatment. The results presented in Table 5 indicate that, regardless of the date of the evaluation, the herbicide formulation 3 according to the invention applied at a dose of 720 g a.i./ha showed significantly higher effectiveness than the commercial herbicide Roundup 360 Plus used at a dose twice as high (1440 g a.i./ha), significantly higher than the same herbicide used at a comparable dose (720 g a.i./ha) and significantly higher than the Havetic herbicide also used at a comparable dose (720 g a.i./ha).

**Table 5. Herbicidal effectiveness of herbicides containing glyphosate in relation to test plants dominated by brome sp., cocksfoot, bluegrass, couch grass, yarrow and white clover (field tests Iówiec, PL, 2022)**

| Combination | Glyphosate dose (g ai/ha) | Weeks after application | |
|---|---|---|---|
| | | 2 | 6 |
| | | herbicidal effectiveness [%] | |
| Roundup 360 Plus (4 I/ha) | 1440 | 89 | 84 |
| Roundup 360 Plus (2 I/ha) | 720 | 48 | 41 |
| Halvetic (4 I/ha) | 720 | 90 | 80 |
| Herbicide formulation 3 (4 I/ha) | 720 | 94 | 86 |
| NIR (p=0.05) | 3.5 | 4.3 | |

Moreover, it is possible to successfully prepare stable, concentrated herbicide formulations containing the adjuvant compositions disclosed in the description, also based on active substances of herbicides other than glyphosate and glufosinate ammonium from groups including: inhibitors of the functioning of acetyl-CoA carboxylase (e.g. quizalofop, cycloxydim, pinoxaden and others), ALS enzyme inhibitors (e.g. imazamox, florasulam, thiencarbazone and others), photosystem l inhibitors (e.g. diquat and others), photosystem II inhibitors (e.g. phenmedipham, bentazone and others), carotenoid biosynthesis inhibitors (e.g. mesotrione and others) and synthetic auxins (e.g. 2,4-D, MCPA, dicamba and others), as well as other foliar herbicides, fungicides, insecticides and growth regulators, as well as their mixtures.

## Claims

1. An adjuvant composition, in particular for the activation of agrochemicals, containing water, ammonium sulfate, hydroxypropyl guar gum, at least one surfactant, silicone antifoaming agent, **characterised in that** it contains
oleyl alcohol, and the surfactant is selected from the group consisting of at least one of a combination of alkyl polyglycoside with polyethoxylated sorbitan monolaurate with a proportion expressed in 14 to 17 wt.%: 3 to 6 wt.%, or,
a combination of an alkylpolyglycoside with an alkoxylated fatty alcohol with a proportion expressed in 14 to 17 wt.%: 3 to 6 wt.%,
and the proportions of water: ammonium sulfate: hydroxypropyl guar gum: surfactant: silicone antifoam agent: oleyl alcohol expressed in wt. with respect to the total adjuvant composition are respectively 35 to 47 wt.%: 25 to 34 wt.%: 1.5 to 2 wt.%: 17 to 22 wt.%: 0.03 to 0.07 wt.%: 4 .5 to 5.5 wt.%.

2. The composition according to claim 1, **characterised in that** the silicone antifoaming agent is octamethylcyclotetrasiloxane.

3. The composition according to any of the claims from 1 to 2, **characterised in that** at least one alkoxylated fatty alcohol is a mixture of polyethoxylated and polypropoxylated alcohols with 16 to 18 carbon atoms.

4. The composition according to any of the claims from 1 to 3, **characterised in that** it further contains a pH buffer.

5. The composition according to claim 4, **characterised in that** the pH buffer is triethanolamine, the content of which is expressed in wt.% is between 6 to 8 wt.%.

6. The composition according to any of the claims from 1 to 5, **characterised in that** its viscosity is in the range of 2000 to 3000 mPa·s at 20 °C.

7. A method of preparing an adjuvant composition as defined in any of the claims from 1 to 6, **characterised in that** it includes the following stages:
Stage I. Mixing water, ammonium sulfate and at least one surfactant to obtain mixture A in the proportions of 35 to 47 wt.%: 25 to 34 wt.%: 17 to 22 wt.%, respectively,
whereas the surfactant is selected from the group consisting of at least one:
a combination of alkyl polyglycoside with polyethoxylated sorbitan monolaurate with a proportion expressed in wt.% from 14 to 17 wt.%: 3 to 6% wt.%, or
a combination of an alkylpolyglycoside with an alkoxylated fatty alcohol with a proportion expressed in wt.% from 14 to 17% wt.%: 3 to 6% wt.%;
Stage II. Mixing oleyl alcohol, silicone antifoaming agent and hydroxypropyl guar gum to form mixture B in the proportions of 4.5 to 5.5 wt.%: 0.03 to 0.07 wt.%: 1.5 to 2 wt.%, respectively;
Stage III. Adding mixture B to mixture A while continuously mixing mixture A and continuing mixing after mixtures A and B are combined; whereas the proportions of the components are expressed in % by weight in the final mixture of Stage III.

8. The method according to claim 7, **characterised in that** Stage I is carried out for a time ranging from 20 minutes to 40 minutes, at a temperature ranging from 20 to 35 °C with a mixing speed ranging from 50 to 200 rpm.

9. The method according to claim 7 or 8, **characterised in that** Stage II is carried out for a time ranging from 3 to 7 minutes.

10. The method according to any of the claims 7 or 8 or 9, **characterised in that** in Stage III the combined mixtures A and B were mixed for a time ranging from 8 to 12 minutes at a speed ranging from 50 to 200 rpm.

11. The method according to any of the claims from 7 to 10, **characterised in that** after preparing mixture A in Stage I, a pH buffer is added to it and mixing is continued for a time ranging from 3 to 5 minutes.

12. The method according to claim 11, **characterised in that** the pH buffer is triethanolamine in an amount expressed in wt.% ranging between 6 to 8 wt.%.

13. The method according to any of the claims from 7 to 12, **characterised in that** at least one alkoxylated fatty alcohol is a mixture of polyethoxylated and polypropoxylated alcohols with 16 to 18 carbon atoms.

14. The method according to any of the claims from 7 to 13, **characterised in that** the silicone antifoaming agent is octamethylcyclotetrasiloxane.

15. The use of an adjuvant composition as defined in any of the claims from 1 to 6 for preparing a mixture with agrochemically active substances, whereas the mixture is being selected from the group consisting of stable, ready-to-use mixtures incorporated into the formulations of the agrochemically active substance(s) and mixtures added immediately before spraying to the sprayer tank in which the substance is located (e) agrochemically active.

16. The use according to claim 15, **characterised in that** the agrochemically active substance is selected from the groups consisting of: glyphosate isopropylamine salt, glyphosate ammonium salt, glyphosate potassium salt, glyphosate trimethylsulfonic salt and glufosinate ammonium; acetyl-CoA carboxylase inhibitors: chisalofop, cycloxydim, pinoxaden and others; ALS enzyme inhibitors: imazamox, foramsulam, thiencarbazone and others; photosystem I inhibitors: e.g. diquat and others, photosystem II inhibitors: phenmedipham, bentazone and others; carotenoid biosynthesis inhibitors: e.g. mesotrione and others; and synthetic auxins: 2,4-D, MCPA, dicamba and others, as well as other foliar herbicides, fungicides, insecticides and growth regulators, as well as their mixtures.

17. The use according to claim 16, **characterised in that** the agrochemically active substance is selected from the group consisting of glyphosate isopropylamine salt, glyphosate ammonium salt, glyphosate potassium salt, glyphosate trimethylsulfone salt and glufosinate ammonium.

18. The use according to claim 16 or 17, **characterised in that** the amount of agrochemically active substance in the mixture ranges from 120 to 450 g in 1 litre, preferably 120 to 360 g/l, more preferably 120 to 300 g/l, most preferably 120 to 200 g/l.

## Patentansprüche

1. Eine Adjuvanszusammensetzung, insbesondere zur Aktivierung von Agrochemikalien, enthaltend Wasser, Ammoniumsulfat, Hydroxypropylguargummi, mindestens ein Tensid, einen Silikonentschäumer, **dadurch gekennzeichnet, dass** sie enthält
Oleylalkohol und dass das Tensid ausgewählt ist aus der Gruppe bestehend aus mindestens einem aus einer Kombination von Alkylpolyglycosid mit polyethoxyliertem Sorbitanmonolaurat in einem Anteil ausgedrückt in 14 bis 17 Gew.-%: 3 bis 6 Gew.- % oder
einer Kombination aus einem Alkylpolyglycosid mit einem alkoxylierten Fettalkohol in einem Anteil ausgedrückt in 14 bis 17 Gew.-%: 3 bis 6 Gew.- %,
und die Anteile von Wasser, Ammoniumsulfat, Hydroxypropylguargummi, Tensid, Silikonentschäumer und Oleylalkohol, ausgedrückt in Gew.-% bezogen auf die gesamte Adjuvanszusammensetzung, jeweils 35 bis 47 Gew.-% betragen: 25 bis 34 Gew.- %: 1,5 bis 2 Gew.-%: 17 bis 22 Gew.- %: 0,03 bis 0,07 Gew.- %: 4,5 bis 5,5 Gew.- %.

2. Die Zusammensetzung nach Anspruch 1, **dadurch gekennzeichnet, dass** der Silikonentschäumer Octamethylcyclotetrasiloxan ist.

3. Die Zusammensetzung nach einem der Ansprüche 1 bis 2, **dadurch gekennzeichnet, dass** mindestens ein alkoxylierter Fettalkohol eine Mischung aus polyethoxylierten und polypropoxylierten Alkoholen mit 16 bis 18 Kohlenstoffatomen ist.

4. Die Zusammensetzung nach einem der Ansprüche 1 bis 3, **dadurch gekennzeichnet, dass** sie ferner einen pH-Puffer enthält.

5. Die Zusammensetzung nach Anspruch 4, **dadurch gekennzeichnet, dass** der pH-Puffer Triethanolamin ist, dessen Gehalt, ausgedrückt in Gew.-%, zwischen 6 und 8 Gew.-% beträgt.

6. Die Zusammensetzung nach einem der Ansprüche 1 bis 5, **dadurch gekennzeichnet, dass** ihre Viskosität im Bereich von 2000 bis 3000 mPa·s bei 20 °C liegt.

7. Ein Verfahren zur Herstellung einer Adjuvanszusammensetzung wie in einem der Ansprüche 1 bis 6 definiert, **dadurch gekennzeichnet, dass** es die folgenden Stufen umfasst:
Stufe I: Mischen von Wasser, Ammoniumsulfat und mindestens einem Tensid unter Erhalt von Mischung A in den Anteilen von 35 bis 47 Gew.-%: 25 bis 34 Gew.- %: 17 bis 22 Gew.- %,
wobei das Tensid ausgewählt ist aus der Gruppe bestehend aus mindestens einem aus:
einer Kombination aus Alkylpolyglycosid mit polyethoxyliertem Sorbitanmonolaurat mit einem Anteil ausgedrückt in Gew.-% von 14 bis 17 Gew.-%: 3 bis 6 Gew.- % oder
einer Kombination aus einem Alkylpolyglycosid mit einem alkoxylierten Fettalkohol mit einem in Gew.-% ausgedrückten Anteil von 14 bis 17 Gew.-%: 3 bis 6 Gew.- %;
Stufe II: Mischen von Oleylalkohol, Silikonentschäumer und Hydroxypropylguargummi unter Bildung von Mischung B in den Anteilen von 4,5 bis 5,5 Gew.-%: 0,03 bis 0,07 Gew.- %: 1,5 bis 2 Gew.- %;
Stufe III: Zugabe von Mischung B zu Mischung A unter kontinuierlichem Mischen von Mischung A und Fortsetzen des Mischens nach dem Zusammengeben der Mischungen A und B; wobei die Anteile der Komponenten in Gew.-% in der Endmischung von Stufe III ausgedrückt sind.

8. Das Verfahren nach Anspruch 7, **dadurch gekennzeichnet, dass** Stufe I für eine Dauer im Bereich von 20 Minuten bis 40 Minuten bei einer Temperatur im Bereich von 20 bis 35 °C mit einer Mischgeschwindigkeit im Bereich von 50 bis 200 U/min durchgeführt wird.

9. Das Verfahren nach Anspruch 7 oder 8, **dadurch gekennzeichnet, dass** Stufe I für eine Dauer im Bereich von 3 bis 7 Minuten durchgeführt wird.

10. Das Verfahren nach einem der Ansprüche 7 oder 8 oder 9, **dadurch gekennzeichnet, dass** in Stufe III die vereinigten Mischungen A und B für eine Dauer im Bereich von 8 bis 12 Minuten bei einer Drehzahl im Bereich von 50 bis 200 U/min gemischt werden.

11. Das Verfahren nach einem der Ansprüche 7 bis 10, **dadurch gekennzeichnet, dass** nach dem Herstellen von Mischung A in Stufe I dieser ein pH-Puffer zugesetzt wird und das Mischen für eine Dauer im Bereich von 3 bis 5 Minuten fortgesetzt wird.

12. Das Verfahren nach Anspruch 11, **dadurch gekennzeichnet, dass** der pH-Puffer Triethanolamin in einer Menge, ausgedrückt in Gew.-%, im Bereich von 6 bis 8 Gew.-% ist.

13. Das Verfahren nach einem der Ansprüche 7 bis 12, **dadurch gekennzeichnet, dass** mindestens ein alkoxylierter Fettalkohol eine Mischung aus polyethoxylierten und polypropoxylierten Alkoholen mit 16 bis 18 Kohlenstoffatomen ist.

14. Das Verfahren nach einem der Ansprüche 7 bis 13, **dadurch gekennzeichnet, dass** der Silikonentschäumer Octamethylcyclotetrasiloxan ist.

15. Die Verwendung einer Adjuvanszusammensetzung wie in einem der Ansprüche 1 bis 6 definiert zur Herstellung einer Mischung mit agrochemisch aktiven Stoffen, wobei die Mischung ausgewählt ist aus der Gruppe bestehend aus stabilen, gebrauchsfertigen Mischungen, die in die Formulierungen des agrochemisch aktiven Stoffes oder der agrochemisch aktiven Stoffe eingearbeitet sind, und Mischungen, die unmittelbar vor dem Sprühen dem Spritztank zugesetzt werden, in dem sich der agrochemisch aktive Stoff befindet.

16. Die Verwendung nach Anspruch 15, **dadurch gekennzeichnet, dass** der agrochemisch aktive Wirkstoff ausgewählt ist aus den Gruppen bestehend aus: Glyphosat-Isopropylaminsalz, Glyphosat-Ammoniumsalz, Glyphosat-Kaliumsalz, Glyphosat-Trimethylsulfonatsalz und Glufosinat-Ammonium; Acetyl-CoA-Carboxylase-Inhibitoren: Quizalofop, Cycloxydim, Pinoxaden und anderen; ALS-Enzym-Inhibitoren: Imazamox, Foramsulfuron, Thiencarbazon und anderen; Photosystem-I-Inhibitoren: z. B. Diquat und anderen, Photosystem-II-Inhibitoren:
Phenmedipham, Bentazon und anderen; Carotinoid-Biosynthese-Inhibitoren: z. B. Mesotrion und anderen; sowie synthetischen Auxinen: 2,4-D, MCPA, Dicamba und anderen sowie anderen Blattherbiziden, Fungiziden, Insektiziden und Wachstumsregulatoren sowie deren Mischungen.

17. Die Verwendung nach Anspruch 16, **dadurch gekennzeichnet, dass** der agrochemisch aktive Wirkstoff ausgewählt ist aus der Gruppe bestehend aus Glyphosat-Isopropylaminsalz, Glyphosat-Ammoniumsalz, Glyphosat-Kaliumsalz, Glyphosat-Trimethylsulfonsalz und Glufosinat-Ammonium.

18. Die Verwendung nach Anspruch 16 oder 17, **dadurch gekennzeichnet, dass** die Menge des agrochemisch aktiven Wirkstoffs in der Mischung im Bereich von 120 bis 450 g in 1 Liter, vorzugsweise 120 bis 360 g/l, weiter bevorzugt 120 bis 300 g/l, am meisten bevorzugt 120 bis 200 g/l liegt.

## Revendications

1. Composition adjuvante, en particulier pour l'activation des produits agrochimiques, contenant d'eau, du sulfate d'ammonium, de gomme de guar hydroxypropylée, au moins un tensio-actif, un agent antimousse à base de silicone, **caractérisée en ce qu'**elle contient
d'alcool oléylique, et un tensio-actif est choisi parmi le groupe constitué par au moins une des combinaison d'un polyglycoside d'alkyle avec le monolaurate de sorbitane polyéthoxylé dont la proportion est exprimée en 14 à 17%poids:3 à 6 %poids, ou
d'une combinaison d'un polyglycoside d'alkyle avec d'alcool gras alcoxylé dont la proportion est exprimée en 14 à 17%poids:3 à 6%poids,
et les proportions d'eau : du sulfate d'ammonium ; de gomme de guar hydroxypropylée :d'un tensio-actif : d'un agent antimousse à base de silicone : d'alcool oléylique exprimées en poids par rapport à la composition adjuvante totale sont respectivement 35 à 47 %poids: 25 à 34 %poids :1,5 à 2%poids: 17 à 22 %poids : 0,03 à 0,07 %poids: 4,5 à 5,5 %poids.

2. Composition selon la revendication 1, **caractérisée en ce que** l'agent antimousse à base de silicone est l'octaméthylcyclotétrasiloxane.

3. Composition selon l'une quelconque des revendications 1 à 2, **caractérisée en ce qu'**au moins un alcool gras alcoxylé est un mélange des alcools poléthoxylés et polypropoxylés ayant 16 à 18 atomes de carbone.

4. Composition selon l'une quelconque des revendications 1 à 3, **caractérisée en ce qu'**elle contient en outre un tampon de pH.

5. Composition selon la revendication 4, **caractérisée en ce que** le tampon de pH est la triéthanolamine dont le contenu exprimé en %poids est compris entre 6 à 8 %poids.

6. Composition selon l'une quelconque des revendications 1 à 5, **caractérisée en ce que** sa viscosité est comprise entre 2000 et 3000 mPa.s à 20 °C.

7. Procédé de préparation une composition adjuvante telle que définie dans l'une quelconque des revendications 1 à 6, **caractérisé en ce qu'**il inclut des étapes suivantes :
Etape 1. On mélange d'eau, du sulfate d'ammonium et d'au moins un tensio-actif pour obtenir un mélange A dans des proportions de 35 à 47 %poids : 25 à 34 %poids : 17 à 22 %poids, respectivement,
vu que le tensio-actif est choisi parmi le groupe constitué par au moins une :
combinaison d'un polyglycoside d'alkyle avec le monolaurate de sorbitane polyéthoxylé dont la proportion exprimée en %poids est de 14 à 17%poids : 3 à 6%poids, ou
combinaison d'un polyglycoside d'alkyle avec un alcool gras polyoxylé dont la proportion exprimée en %poids est de 14 à 17%poids : 3 à 6%poids ;
Etape II. On mélange d'alcool oléylique, d'un agent antimousse à base de silicone et de gomme de guar hydroxypropylée pour former un mélange B dans des proportions de 4,5 à 5,5 %poids : 0,03 à 0,07 %poids : 1,5 à 2 %poids, respectivement;
Etape III. On ajoute le mélange B au mélange A tout en continuant de mélanger le mélange A et on continue à mélanger après les mélanges A et B sont combinés ; tandis que les proportions des composantes sont exprimées en % en poids dans le mélange final d'étape III.

8. Procédé selon la revendication 7, **caractérisé en ce que** l'étape I est effectuée pendant une durée allant de 20 minutes à 40 minutes, à la température comprise entre 20 et 35°C avec une vitesse de malaxage comprise entre 50 et 200 tr/min.

9. Procédé selon la revendication 7 ou 8, **caractérisé en ce que** l'étape II est effectuée pendant une durée allant de 3 à 7 minutes.

10. Procédé selon l'une quelconque des revendications 7 ou 8 ou 9, **caractérisé en ce qu'**à l'étape III les mélanges A et B combinés ont été mélangés pendant une durée allant de 8 minutes à 12 minutes à une vitesse de malaxage comprise entre 50 et 200 tr/min.

11. Procédé selon l'une quelconque des revendications de 7 à 10, **caractérisé en ce qu'**après le mélange A est préparé à l'étape I, on y ajoute un tampon de pH et on continue de mélanger pendant une durée allant de 3 à 5 minutes.

12. Procédé selon la revendication 11, **caractérisé en ce que** le tampon de pH est la triéthanolamine dans une quantité exprimée en %poids comprise entre 6 et 8%poids.

13. Procédé selon l'une quelconque des revendications de 7 à 12, **caractérisé en ce qu'**au moins un alcool gras alcoxylé est un mélange des alcools poléthoxylés et polypropoxylés ayant 16 à 18 atomes de carbone.

14. Procédé selon l'une quelconque des revendications de 7 à 13, **caractérisé en ce que** l' agent antimousse à base de silicone est l'octaméthylcyclotétrasiloxane.

15. Utilisation d'une composition adjuvante telle que définie dans l'une quelconque des revendications de 1 à 6 pour préparer un mélange avec des composés agrochimiquement actifs, le mélange étant sélectionné parmi le groupe constitué par des mélanges stables prêts à l'emploi incorporés aux formulations des composés agrochimiquement actifs et mélanges ajoutés immédiatement avant la pulvérisation dans le réservoir de pulvérisation dans lequel le composé agrochimiquement actif est disposé.

16. Utilisation selon la revendication 15, **caractérisée en ce que** le composé agrochimiquement actif est sélectionné dans les groupes constitués par : sel d'isopropylamine du glyphosate, sel ammonium du glyphosate, sel de potassium du glyphosate, sel de triméthylsulfone du glyphosate et du glufosinate d'ammonium ; des inhibiteurs de l'acétyl-CoA carboxylase : le chisalofop, la cycloxydime, le pinoxaden et les autres ; des inhibiteurs de l'enzyme ALS : l'imazamox, le foramsulam, le thiencarbazone et les autres ; des inhibiteurs du photosystème I : par exemple, diquat et les autres, des inhibiteurs du photosystème II : le phenmédiphame, la bentazone et les autres ; des inhibiteurs de la biosynthèse de caroténoïdes : par exemple, le mésotrione et les autres ; et des auxines synthétiques : 2,4-D, MCPA ; le dicamba et les autres, ainsi que les autres herbicides foliaires, des fongicides, des insecticides et des substances de croissance, ainsi que leurs mélanges.

17. Utilisation selon la revendication 16, **caractérisée en ce que** le composé agrochimiquement actif est sélectionné dans le groupe constitué par un sel d'isopropylamine du glyphosate, un sel ammonium du glyphosate, un sel de potassium du glyphosate, un sel de triméthylsulfone du glyphosate et du glufosinate d'ammonium.

18. Utilisation selon la revendication 16 ou 17, **caractérisée en ce que** la quantité d'un composé agrochimiquement actif dans le mélange est comprise entre 120 à 450 g dans 1 litre, de manière préférée 120 à 360 g/l, de manière plus préférée 120 à 300 g/l, de manière la plus préférée 120 à 200 g/l.
